# NEW EUROPEAN PATENT SPECIFICATION

(11) **EP 2 737 250 B2**
(45) Date of publication and mention of the opposition decision: **09.11.2022**
(45) Mention of the grant of the patent: 27.09.2017
(21) Application number: 12766147.8
(22) Date of filing: 23.07.2012
(51) Int. Cl.: F23D 14/06, F24C 3/08

(54) **GAS BURNER, IN PARTICULAR FOR A FOOD COOKING APPLIANCE**
GASBRENNER, INSBESONDERE FÜR EIN GERÄT ZUM KOCHEN VON LEBENSMITTELN
BRÛLEUR À GAZ, EN PARTICULIER POUR UN APPAREIL DE CUISSON D'ALIMENTS

(30) Priority: 29.07.2011 IT TO20110078
(43) Date of publication of application: 04.06.2014
(73) Proprietor: Whirlpool EMEA S.p.A., 20016 Pero (MI) (IT)
(72) Inventor: ALBERTI, Carlo, I-60044 Fabriano (AN) (IT)
(74) Representative: Spina, Alessandro
(86) International application number: PCT/IB2012/053739
(87) International publication number: WO 2013/017986

(56) References cited:
- EP-A1- 1 508 001
- EP-A1- 1 880 142
- FR-A- 1 114 051
- US-A- 2 402 997
- US-A- 5 628 302
- US-A1- 2003 087 214
- US-A1- 2005 056 268
- US-A1- 2008 160 465
- US-A1- 2010 089 384
- US-B1- 6 299 436

## Description

The present invention relates to a gas burner, in particular for a food cooking appliance, according to the preamble of claim 1.

The present invention further relates to a food cooking appliance comprising said gas burner.

A gas burner is known in the art, in particular for a food cooking appliance, which is of the type that comprises a cup within which an injector is positioned for emitting gas coming from a suitable duct that feeds gas to said burner.

Said burner also comprises a flame divider associated with said cup and comprising a Venturi effect chamber; usually the Venturi effect chamber is arranged substantially coaxial to said injector.

In this known burner, gas is typically mixed with primary air above the cooking top whereon the burner is installed, in particular inside the cup and/or the chamber acting as a Venturi tube.

In order to allow the air-gas mixture to come out of the burner evenly, said known burner comprises a cap associated with said flame divider, which cap allows the gas to come out through a plurality of apertures, which are usually obtained in an upper surface of said flame divider.

In particular, in a burner of a known type the cap is laid on the flame divider and the air-gas mixture comes out through said plurality of apertures substantially horizontally; therefore, the flame obtained from said air-gas mixture has a direction that essentially depends on the shape of the assembly consisting of the flame divider and the cap, and usually it extends indirectly towards a cooking container placed over the burner.

As a consequence, a substantial drawback of the above-described burner is that the substantially circular design of the flame divider and of the cap, causing the air-gas mixture to come out substantially horizontally, makes it very difficult to direct the burner flames upwards, i.e. towards the central portion of the bottom of the cooking containers positioned over the burner.

Such difficulty in directing the burner flames towards the central portion of the bottom of the cooking containers inevitably translates into inadequate and insufficient efficiency of the burner itself.

In particular, when using cooking containers having a spherical bowl-shaped bottom, the above-described burner may even require that the cap be replaced with other components having an appropriate profile.

Therefore, such a solution also suffers from the drawback that it requires the use of a large number of components adapted to constitute the entire burner assembly in order to ensure adequate heating of different cooking containers, in particular of the central portion of the bottom of said cooking containers; this complexity inevitably translates into higher costs.

In addition, the solutions known in the art comprise a pan supporting grate which is separate from the remaining components of the burner.

This inevitably implies the necessity of using a positioning system for appropriately centering the pan supporting grate with respect to the burner, resulting in inevitably higher costs for manufacturing the burner and the entire food cooking appliance that comprises it.

Furthermore, the solutions known in the art often require ad hoc solutions to avoid that the grates might get off balance and/or turn over relative to the burner and the cooking appliance, in particular in the event that a cooking container is positioned incorrectly on the pan supporting grate.

It is clear that the use of said ad hoc solutions involves higher costs for manufacturing the entire cooking appliance and makes said cooking appliance more difficult to assemble. Another gas burner is known from US6299436 B1 disclosing the preamble of claim 1. In this frame, it is the main object of the present invention to provide a gas burner, in particular for a food cooking appliance, which is so designed as to overcome the drawbacks of prior-art gas burners.

In particular, it is one object of the present invention to provide a gas burner, in particular for a food cooking appliance, which is so designed as to ensure adequate burner efficiency.

It is another object of the present invention to provide a gas burner, in particular for a food cooking appliance, wherein it is possible to heat a cooking container in an optimal manner without necessarily having to replace a burner element with other components having an adequate profile.

It is a further object of the present invention to provide a gas burner, in particular for a food cooking appliance, wherein it is not necessary to use a large number of components adapted to constitute the entire burner assembly in such a way as to obtain adequate heating of different cooking containers, while also reducing the costs thereof.

It is yet another object of the present invention to provide a gas burner, in particular for a food cooking appliance, wherein it is possible to avoid the use of ad hoc solutions to prevent the grates from getting off balance and/or turning over relative to the burner or the cooking appliance.

Said objects are achieved by the present invention through a gas burner, in particular for a food cooking appliance, incorporating the features set out in the appended claims, which are intended to be an integral part of the present description.

Further objects, features and advantages of the present invention will become apparent from the following detailed description and from the annexed drawings, which are supplied by way of non-limiting example, wherein:
- Figs. 1a and 1b show a perspective view and a top view, respectively, of a first embodiment of a gas burner, in particular for a food cooking appliance, according to the present invention;
- Figs. 2a and 2b show an exploded view and a side sectional view, respectively, of the gas burner of Figs. 1a and 1b;
- Figs. 3a and 3b show a perspective view and a top view, respectively, of a second embodiment of a gas burner, in particular for a food cooking appliance, according to the present invention;
- Figs. 4a and 4b show an exploded view and a side sectional view, respectively, of the gas burner of Figs. 3a and 3b.

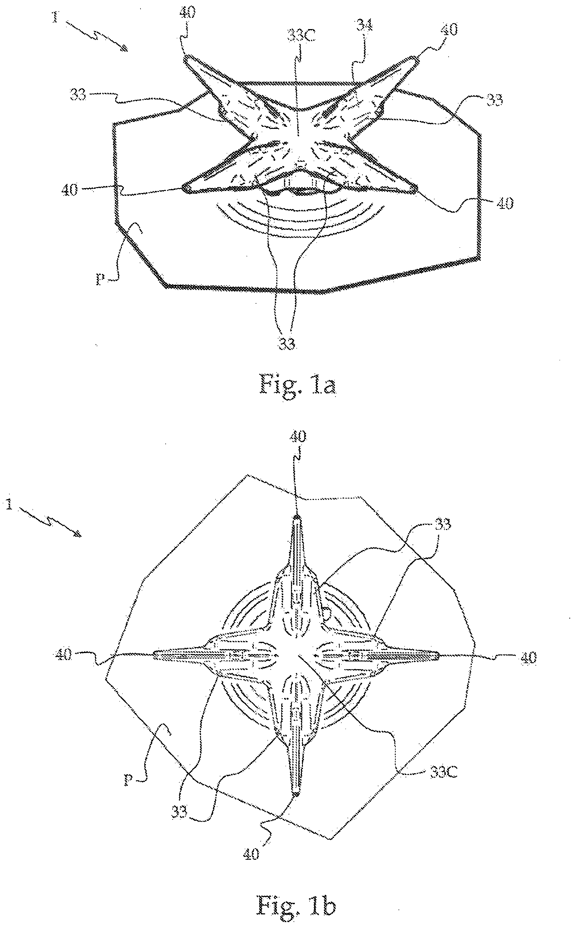

Referring now to the annexed Figures 1a to 2b, reference numeral 1 designates as a whole a gas burner, in particular for a food cooking appliance, in accordance with a first embodiment of the present invention.

The annexed drawings do not show said cooking appliance, which may be a gas cooking top or a gas cooking range.

The burner 1 comprises a cup 10 associated with an injector 11 for letting out gas coming from a duct 12 that supplies gas to said burner 1.

In the annexed drawings, the duct 12 is made as one piece with said cup 10; it is however clear that said duct 12 may also be provided as a body distinct from the cup 10, and then be associated therewith through known fastening means (not shown in the annexed drawings).

The burner 1 also comprises a flame divider 20 associated with said cup 10 and comprising a Venturi effect chamber 21, said chamber 21 being in particular positioned substantially coaxial to said injector 11.

Preferably, said Venturi effect chamber 21 extends substantially vertically within said flame divider 20; it is clear that, for the purposes of the present invention, the term "vertical" is used with reference to a burner 1 installed on a cooking appliance.

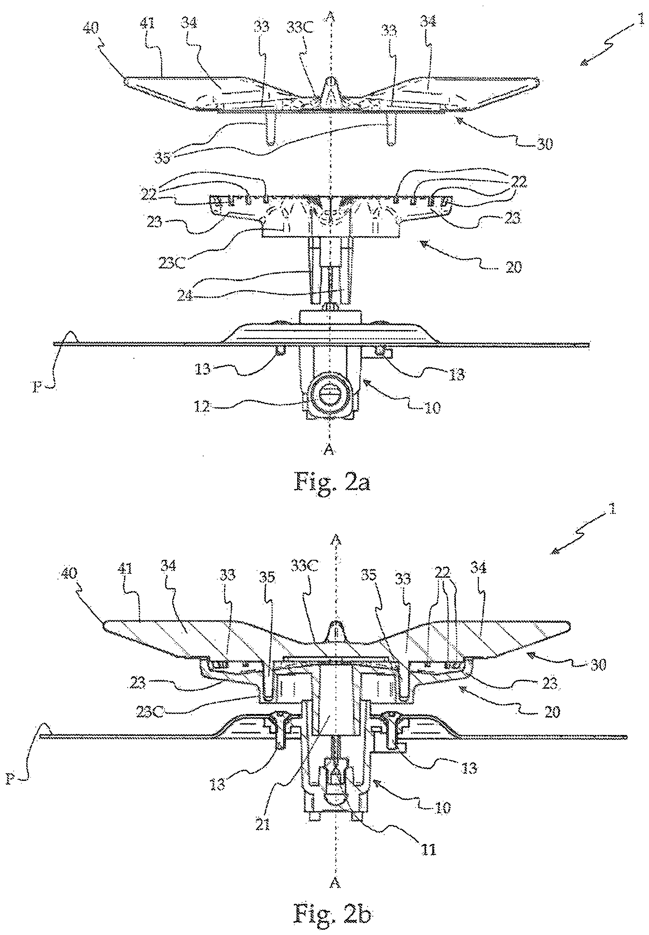

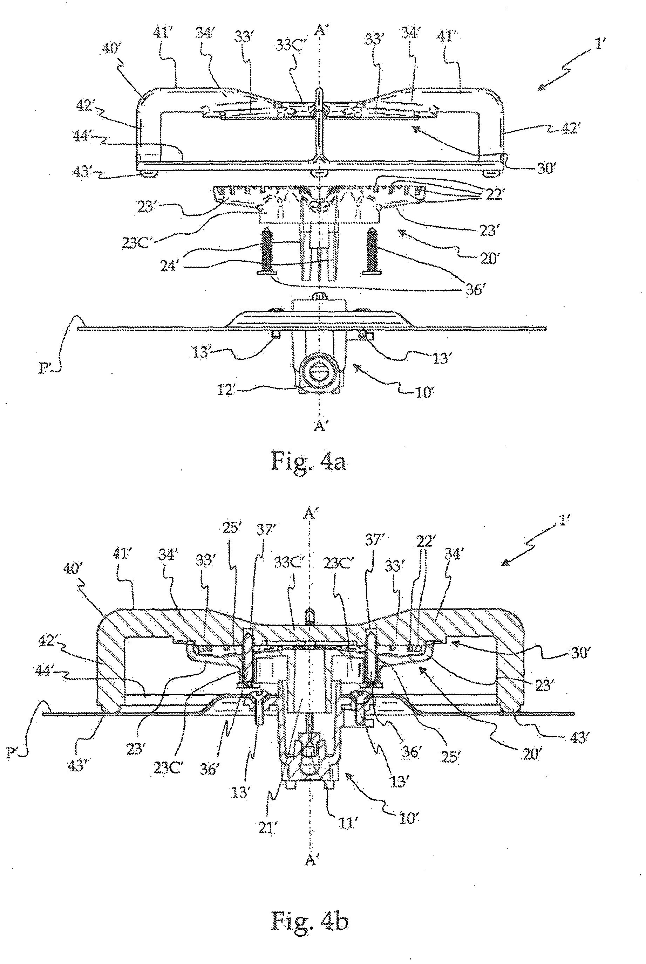

Furthermore, the chamber 21 extends in a central position within said flame divider 20, i.e. in such a way as to substantially coincide with an axis (substantially coinciding with the straight line A-A of Figs. 2a and 2b and with the straight line A'-A' of Figs. 4a and 4b) of the flame divider 20; it is however clear the Venturi effect chamber 21 may also be arranged differently within said flame divider 20.

The burner 1 further comprises a cap 30 associated with said flame divider 20, so as to allow the gas to come out through a plurality of apertures 22 in the flame divider 20 and/ or in the cap 30.

In the embodiment shown in the annexed drawings, said plurality of apertures 22 are obtained on the flame divider 20, in particular near an upper edge of said flame divider 20; however, said plurality of apertures 22 may at least partially be provided on said cap 30, in particular near a lower portion of said cap 30.

In accordance with the present invention, said flame divider 20 is so designed as to comprise at least three appendices 23 extending from a central portion 23C of the flame divider 20, and said cap 30 is so designed as to comprise at least three elongated portions 33 coupled to said appendices 23 and extending from a central area 33C of said cap 30.

Also, in accordance with the present invention said cap 30 is integrated with a pan supporting grate 40.

The particular design of the burner 1 according to the present invention allows to ensure adequate efficiency of said burner 1, in particular without requiring an element of the burner 1 to be replaced with other components having a suitable profile.

In addition, the burner 1 according to the present invention allows to avoid the use of a large number of components adapted to constitute the entire burner 1 in order to obtain adequate heating of different cooking containers, while at the same time reducing the costs thereof.

The fact that the pan supporting grate 40 is integrated with the cap 30 allows to avoid the use of ad hoc solutions to prevent the grate 40 from getting off balance and/ or turning over relative to the burner 1 and to the cooking appliance, as well as to avoid the use of a positioning system adapted to center the grate 40 appropriately with respect to the burner 1.

It is clear that the number of said appendices 23 of the flame divider 20 must match the number of said elongated portions 33 of the cap 30, so that each elongated portion 33 of the cap 30 can be coupled to a respective appendix 23 of the flame divider 20.

Preferably, the number of said appendices 23 and of said elongated portions 33 is between three and five; in particular, as shown in the annexed drawings, the number of said appendices 23 and of said elongated portions 33 is four.

Furthermore, the length of said appendices 23 and of said elongated portions 33 is between 30 mm and 70 mm, depending on the power of the burner 1. Advantageously, the appendices 23 and the elongated portions 33 are equidistant from each other, the angles between each appendix 23 being all equal.

Each one of the elongated portions 33 can be further extended, in particular when said elongated portions 33 are made as one piece with the grate 40, which will be discussed below.

In particular, said appendices 23 and said elongated portions 33 are tapered, i.e. they are so designed as to have a body that becomes narrower starting from the central portion 23C of the flame divider 20 and from the central area 33C of the cap 30 until it reaches the outermost part of the burner 1; this design of the appendices 23 and of the elongated portions 33 allows the primary air and/or secondary air to easily arrive near said central portion 23C of the flame divider 20 and said central area 33C of the cap 30.

The apertures 22 located near said central portion 23C of the flame divider 20 and said central area 33C of the cap 30 have smaller dimensions than those of the apertures 22 located near the free end of the appendices 23 and of the elongated portions 33. This allows to obtain a homogeneous flame and optimal gas consumption, in that the flame emitted from each aperture 22 located near said central portion 23C of the flame divider 20 and said central area 33C of the cap 30 does not overlap the flame emitted from the other apertures 22. According to the invention, each elongated portion 33 of the cap 30 comprises a raised element 34 (visible in particular in Figs. 2a and 2b), which forms at least a part of a first section 41 of said pan supporting grate 40.

In the embodiment shown in Figs. 2a and 2b, each raised element 34 is preferably so designed that said raised element 34 is longer than the corresponding elongated portion 33 by up to 50. The height of said raised element 34 is between 5 mm and 30 mm.

Figs. 2a and 2b also show that the cup 10 of the burner 1 according to the present invention is preferably secured to a worktop P of the cooking appliance through first fastening means 13, advantageously consisting of screws.

The flame divider 20 further comprises centering means 24 for properly positioning said flame divider 20 with respect to the cup 10; in addition, said centering means 24 also allow to prevent the flame divider 20 from rotating on said cup 10. Preferably, said centering means comprise at least one fin 24 (advantageously one to five fins 24) extending towards the cup 10 and adapted to be coupled to a matching seat (not shown in the drawings) obtained on the cup 10.

The flame divider 20 and/or the cap 30 further comprise coupling means 35 to allow for correct positioning of said cap 30 with respect to the flame divider 20 and to prevent the cap 30 from rotating and/or turning over relative to said flame divider 20, in particular after placing a cooking container on the grate 40.

Preferably, said coupling means comprise at least one peg 35 associated at the bottom with said cap 30; alternatively, said coupling means may comprise second fastening means (not shown in Figs. 2a and 2b, but indicated by reference numeral 36' in Figs. 4a and 4b), which allow the flame divider 20 and the cap 30 to be joined together substantially as one piece.

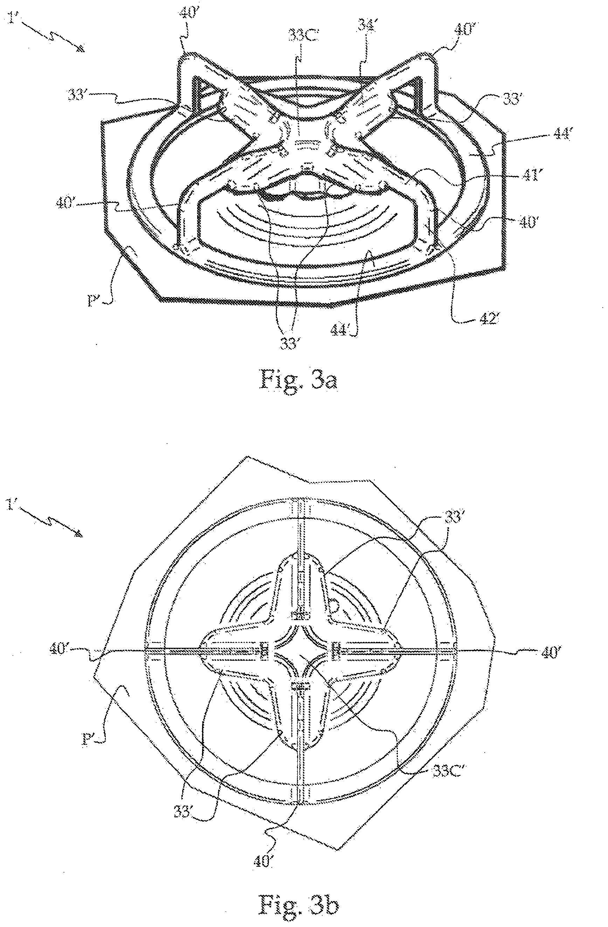

Figs. 3a to 4b show a second embodiment of a gas burner 1', in particular for a food cooking appliance, according to the present invention.

In these drawings, the items that correspond to those of the first embodiment (shown in Figs. 1a to 2b) are designated by the same reference numerals with the addition of an apostrophe (').

As can be seen in said drawings, the burner 1' is equipped with coupling means that comprise second fastening means 36' allowing the flame divider 20' and the cap 30' to be joined substantially as one piece; as a consequence, this allows said cap 30' to be properly positioned with respect to the flame divider 20' in a simple and immediate manner, thus preventing the cap 30' from rotating and/or turning over relative to said flame divider 20', in particular after positioning a cooking container on the grate 40'.

The fastening means 36' comprise in particular at least one screw which, after crossing a through hole 25' obtained in the flame divider 20', bites into a cavity 37' obtained on the lower portion of the cap 30', said through hole 25' and said cavity 37' (visible in Fig. 4b) being coaxial to each other.

However, also in this second embodiment the coupling means may comprise at least one peg, not shown in Figs. 3a to 4b but substantially corresponding to the peg designated by reference numeral 34 in Figs. 2a and 2b relating to the first embodiment, said peg being integral with the cap 30' and occupying a matching seat obtained on the flame divider 20'. According to the invention, said grate 40' comprises:
- a first section 41' associated with each elongated portion 33' of the cap 30' through a raised element 34' of said cap 30';
- a second section 42' substantially facing a worktop P' of the cooking appliance.

Said second section 42' of the grate 40' is laid on the worktop P', in particular through the interposition of a bearing element 43', preferably made of elastic material.

With this design, the cap 30' is supported by the grate 40' and does not rest on the burner 1'. Furthermore, if said second fastening means 36' are used for joining the flame divider 20' and the cap 30' substantially as one piece, also the flame divider 20' will be supported by the grate 40'. Among the many advantages of this solution, the most important one is that it allows preventing a possible overturning of the flame divider 20' and of the cap 30', in particular when a cooking container is placed on the grate 40'.

In the annexed drawings relating to the first embodiment (shown in Figs. 1a to 2b) and to the second embodiment (shown in Figs. 3a to 4b), it can be noticed that:
- the first section 41, 41' of the grate 40, 40' is substantially horizontal, i.e. substantially parallel to the worktop P, P';
- the second section 42' of the grate 40' of the second embodiment is substantially vertical, i.e. substantially perpendicular to the worktop P';
It is however clear that the first section 41, 41' and the second section 42' of the grate 40, 40' may also have shapes other than those described above and shown in the annexed drawings.

Preferably, said grate 40' comprises fitting elements 44' adapted to join together each second section 42' of the grate 40'; this reinforces the whole structure of the burner 1', in particular of the assembly made up of the cap 30' and the grate 40'.

The advantages of a gas burner 1, 1' according to the present invention are apparent from the above description.

In particular, the design of the burner 1, 1' allows to ensure adequate efficiency of said burner 1, 1' in particular without requiring an element of the burner 1, 1' to be replaced with other components having a suitable profile.

The special design of the burner 1, 1' also allows to avoid the use of a large number of components adapted to constitute the entire burner 1, 1' in order to obtain adequate heating of different cooking containers, while at the same time reducing the costs thereof.

In addition, the fact that the cap 30, 30' is integrated with the pan supporting grate 40, 40' allows to avoid the use of ad hoc solutions to prevent the grate 40, 40' from getting off balance and/or turning over relative to the burner 1, 1' and to the cooking appliance, as well as to avoid the use of a positioning system adapted to center the grate 40, 40' appropriately with respect to the burner 1,1'.

In addition, the fact that the appendices 23, 23' and the elongated portions 33, 33' have a tapered design allows the primary and/or secondary air to easily arrive near said central portion 23C, 23C' of the flame divider 20, 20' and said central area 33C, 33C' of the cap 30, 30'.

Furthermore, the fact that the apertures 22, 22' located near said central portion 23C, 23C' of the flame divider 20, 20' and said central area 33C, 33C' of the cap 30, 30' have smaller dimensions than the apertures 22, 22' located near the free end of the appendices 23, 23' and of the elongated portions 33, 33' ensures optimal gas consumption; in fact, the flame emitted from each aperture 22, 22' located near said central portion 23C, 23C' of the flame divider 20, 20' and said central area 33C, 33C' of the cap 30, 30' does not overlap the flame emitted from the other apertures 22, 22'.

Among the many possible variants, it is worth mentioning by way of example that the worktop P, P' of the cooking appliance can be so designed to include embossings (not shown in the drawings) in the areas corresponding to each appendix 23, 23' of the flame divider 20, 20'; this solution facilitates the entry of the primary and/or secondary air into said flame divider 20, 20' and ensures better gas combustion.

It can therefore be easily understood that the present invention is not limited to the above-described burner, but may be subject to many modifications, improvements or replacements of equivalent parts and elements without departing from the inventive idea, as clearly specified in the following claims.

## Claims

1. A gas burner (1; 1') for a food cooking appliance, said burner (1; 1') comprising:
- a cup (10; 10');
- a flame divider (20; 20') associated with said cup (10; 10') and comprising a Venturi effect chamber (21; 21'); and
- a cap (30; 30') associated with said flame divider (20; 20') so as to allow gas to come out through a plurality of apertures (22; 22') of said flame divider (20; 20') and/or of said cap (30; 30'),
- wherein said flame divider (20; 20') is so designed as to comprise at least three appendices (23; 23') extending from a central portion (23C; 23C') of the flame divider (20; 20'), and said cap (30; 30') is so designed as to comprise at least three elongated portions (33; 33') coupled to said appendices (23; 23') and extending from a central area (33C; 33C') of said cap (30; 30');
**characterized in that** said cup (10; 10') comprises an injector (11; 11') for letting out gas coming from a duct (12; 12') that supplies gas to said burner (1; 1'), in particular said Venturi effect chamber (21; 21') being positioned substantially coaxial to said injector (11; 11');
- **in that** said cap (30; 30') is integrated with a pan supporting grate (40; 40'), being made in one piece and **in that** said-grate (40') comprises:
i) a first section (41') associated with each elongated portion (33') of the cap (30') through a raised element (34') of said cap (30') and
ii) a second section (42') substantially facing a worktop (P') of the cooking appliance,
the apertures (22; 22') located near said central portion (23C; 23C') of the flame divider (20; 20') and said central area (33C; 33C') of the cap (30; 30') having smaller dimensions than the apertures (22; 22') located near the free end of the appendices (23; 23') and of the elongated portions (33; 33').

2. A burner (1; 1') according to claim 1, **characterized in that** the number of said appendices (23; 23') of the flame divider (20; 20') matches the number of said elongated portions (33; 33') of the cap (30; 30'), so that each elongated portion (33; 33') of the cap (30; 30') can be coupled to a respective appendix (23; 23') of the flame divider (20; 20').

3. A burner (1; 1') according to one or more of the preceding claims, **characterized in that** the number of said appendices (23; 23') and of said elongated portions (33; 33') is between three and five, in particular the number of said appendices (23; 23') and of said elongated portions (33; 33') being four.

4. A burner (1; 1') according to one or more of the preceding claims, **characterized in that** said appendices (23; 23') and said elongated portions (33; 33') are tapered.

5. A burner (1; 1') according to claim 1, **characterized in that** said flame divider (20; 20') comprises centering means (24; 24') for properly positioning said flame divider (20; 20') with respect to the cup (10; 10'), in particular said centering means comprising at least one fin (24; 24') projecting towards the cup (10, 10') and adapted to be coupled to a matching seat obtained on said cup (10, 10').

6. A burner (1; 1') according to claim 1, **characterized in that** the flame divider (20; 20') and/or the cap (30; 30') further comprise coupling means (35; 35') allowing said cap (30; 30') to be properly positioned with respect to the flame divider (20; 20') and preventing the cap (30; 30') from rotating and/or turning over relative to said flame divider (20; 20').

7. A burner (1; 1') according to claim 6, **characterized in that** said coupling means comprise at least one peg (35) associated at the bottom with said cap (30).

8. A burner (1; 1') according to claim 6, **characterized in that** said coupling means comprise second fastening means (36') that allow the flame divider (20; 20') and the cap (30; 30') to be joined together substantially as one piece.

9. A burner (1; 1') according to any preceding claims, **characterized in that** said second section (42') of the grate (40') rests on the worktop (P'), in particular through the interposition of a bearing element (43').

10. A burner (1; 1') according to any preceding claims, **characterized in that** said grate (40') comprises fitting elements (44') adapted to join together each second section (42') of the grate (40').

11. A food cooking appliance comprising a burner (1; 1') according to one or more of the preceding claims and a worktop (P; P'), **characterised in that** said worktop (P; P') of the cooking appliance includes embossings in the areas corresponding to each appendix (23; 23') of the flame divider (20; 20').

## Patentansprüche

1. Gasbrenner (1, 1') für ein Lebensmittelkochgerät, wobei der Brenner (1, 1') umfasst:
- eine Schale (10; 10');
- einen Flammenteiler (20; 20'), der mit der Schale (10, 10') verbunden ist und der eine Venturi-Effekt-Kammer (21; 21') umfasst; und
- eine Kappe (30; 30'), die mit dem Flammenteiler (20; 20') verbunden ist, um zu ermöglichen, dass Gas durch eine Vielzahl von Öffnungen (22; 22') des Flammenteilers (20; 20') und/oder der Kappe (30; 30') herauskommt,
- wobei der Flammenteiler (20; 20') derart gestaltet ist, um zumindest drei Anhänge (23; 23') zu umfassen, die sich von einem Mittelteil (23C; 23C') des Flammenteilers (20; 20') erstrecken, und wobei die Kappe (30; 30') derart gestaltet ist, um zumindest drei längliche Teile (33; 33') zu umfassen, die mit den Anhängen (23; 23') gekoppelt sind und die sich von einem zentralen Bereich (33C; 33C') der Kappe (30; 30') erstrecken;
**dadurch gekennzeichnet, dass** die Schale (10; 10') einen Injektor (11, 11') zum Herauslassen von Gas umfasst, das aus einer Leitung (12, 12') herauskommt, die Gas zu dem Brenner (1, 1') liefert, wobei insbesondere die Venturi-Effekt-Kammer (21, 21') im Wesentlichen koaxial zu dem Injektor (11, 11') positioniert ist;
- dadurch, dass die Kappe (30; 30') mit einem Pfannen tragenden Rost (40; 40') integriert ist, der aus einem Stück gefertigt ist, und dadurch, dass der Rost (40') umfasst:
i) einen ersten Abschnitt (41'), der mit jedem länglichen Teil (33') der Kappe (30') durch ein erhöhtes Element (34') der Kappe (30') verbunden ist und
ii) einen zweiten Abschnitt (42'), der im Wesentlichen einer Arbeitsplatte (P') des Kochgerätes zugewandt ist.
wobei die Öffnungen (22; 22'), die nahe dem Mittelteil (23C; 23C') des Flammenteilers (20; 20') und dem zentralen Bereich (33C; 33C') der Kappe (30; 30') angeordnet sind, kleinere Abmessungen aufweisen als die Öffnungen (22; 22'), die nahe dem freien Ende der Anhänge (23; 23') und der länglichen Teile (33; 33') angeordnet sind.

2. Brenner (1; 1') nach Anspruch 1, **dadurch gekennzeichnet, dass** die Anzahl der Anhänge (23; 23') des Flammenteilers (20; 20') mit der Anzahl der länglichen Teile (33; 33') der Kappe (30; 30') übereinstimmt, sodass jeder längliche Teil (33; 33') der Kappe (30; 30') mit einem entsprechenden Anhang (23; 23') des Flammenteilers (20; 20') gekoppelt werden kann.

3. Brenner (1; 1') nach einem oder mehreren der vorstehenden Ansprüche, **dadurch gekennzeichnet, dass** die Anzahl der Anhänge (23; 23') und der länglichen Teile (33; 33') zwischen drei und fünf liegt, wobei die Anzahl der Anhänge (23; 23') und der länglichen Teile (33; 33') insbesondere vier ist.

4. Brenner (1; 1') nach einem oder mehreren der vorstehenden Ansprüche, **dadurch gekennzeichnet, dass** die Anhänge (23; 23') und die länglichen Teile (33; 33') verjüngt sind.

5. Brenner (1; 1') nach Anspruch 1, **dadurch gekennzeichnet, dass** der Flammenteiler (20; 20') eine Zentriereinrichtung (24; 24') umfasst, zum ordnungsgemäßen Positionieren des Flammenteilers (20; 20') in Bezug auf die Schale (10; 10'), wobei die Zentriereinrichtung insbesondere zumindest eine Rippe (24; 24') umfasst, die in Richtung zu der Schale (10, 10') vorsteht und angepasst ist, um mit einem passenden Sitz, der an der Schale (10, 10') erhalten wird, gekoppelt zu werden.

6. Brenner (1; 1') nach Anspruch 1, **dadurch gekennzeichnet, dass** der Flammenteiler (20; 20') und/oder die Kappe (30; 30') weiter eine Kopplungseinrichtung (35; 35') umfassen, die der Kappe (30; 30') ermöglicht, ordnungsgemäß in Bezug auf den Flammenteiler (20; 20') positioniert zu werden und die verhindert, dass die Kappe (30; 30') sich relativ zu dem Flammenteiler (20; 20') dreht und/oder wendet.

7. Brenner (1, 1') nach Anspruch 6, **dadurch gekennzeichnet, dass** die Kopplungseinrichtung zumindest einen Zapfen (35) umfasst, der an dem Boden mit der Kappe (30) verbunden ist.

8. Brenner (1; 1') nach Anspruch 6, **dadurch gekennzeichnet, dass** Kopplungseinrichtung eine zweite Befestigungseinrichtung (36') umfasst, die ermöglicht, dass der Flammenteiler (20; 20') und die Kappe (30; 30') im Wesentlichen als ein Teil zusammengefügt werden können.

9. Brenner (1; 1') nach einem der vorstehenden Ansprüche, **dadurch gekennzeichnet, dass** der zweite Abschnitt (42') des Rosts (40') auf der Arbeitsplatte (P') aufliegt, insbesondere durch das Einfügen eines Lagerelements (43').

10. Brenner (1; 1') nach einem der vorstehenden Ansprüche, **dadurch gekennzeichnet, dass** der Rost (40') Passelemente (44') umfasst, die angepasst sind, um jeden zweiten Abschnitt (42') des Rosts (40') miteinander zu verbinden.

11. Lebensmittelkochgerät, umfassend einen Brenner (1; 1') nach einem oder mehreren der vorstehenden Ansprüche und eine Arbeitsplatte (P, P'), **dadurch gekennzeichnet, dass** die Arbeitsplatte (P, P') des Kochgeräts in den Bereichen, die jedem Anhang (23, 23') des Flammenteilers (20, 20') entsprechen, Prägungen aufweist.

## Revendications

1. Brûleur à gaz (1 ; 1') pour un appareil de cuisson d'aliments, ledit brûleur (1 ; 1') comprenant :
- une coupelle (10 ; 10') ;
- un diviseur de flamme (20 ; 20') associé à ladite coupelle (10 ; 10') et comprenant une chambre à effet Venturi (21 ; 21') ; et
- un capuchon (30 ; 30') associé audit diviseur de flamme (20 ; 20') de façon à permettre au gaz de sortir par une pluralité d'ouvertures (22 ; 22') dudit diviseur de flamme (20 ; 20') et/ou dudit capuchon (30 ;30'),
- dans lequel ledit diviseur de flamme (20 ; 20') est conçu de façon à comprendre au moins trois appendices (23 ; 23') s'étendant depuis une partie centrale (23C ; 23C') du diviseur de flamme (20 ; 20'), et ledit capuchon (30 ; 30') est conçu de façon à comprendre au moins trois parties allongées (33 ; 33') couplées auxdits appendices (23 ; 23') et s'étendant depuis une zone centrale (33C ; 33C') dudit capuchon (30 ; 30') ;
**caractérisé en ce que** ladite coupelle (10; 10') comprend un injecteur (11 ; 11') pour laisser le gaz sortir d'un conduit (12 ; 12') qui distribue le gaz audit brûleur (1 ; 1'), en particulier ladite chambre à effet Venturi (21 ; 21') étant positionnée de façon sensiblement coaxiale par rapport audit injecteur (11 ; 11') ;
- **en ce que** ledit capuchon (30 ; 30') est intégré à une grille de support de casserole (40 : 40') étant fabriquée d'une pièce et **en ce que** ladite grille (40') comprend :
i) une première section (41') associée à chaque partie allongée (33') du capuchon (30') à travers un élément relevé (34') dudit capuchon (30') et
ii) une seconde section (42') faisant essentiellement face à un plan de travail (P') de l'appareil de cuisson,
les ouvertures (22 ; 22') situées près de ladite partie centrale (23C ; 23C') du diviseur de flamme (20 ; 20') et ladite zone centrale (33C; 33C') du capuchon (30 ; 30') présentant des dimensions plus petites que les ouvertures (22 ; 22') situées près de l'extrémité libre des appendices (23 ; 23') et des parties allongées (33 ; 33').

2. Brûleur (1 ; 1') selon la revendication 1, **caractérisé en ce que** le nombre desdits appendices (23 ; 23') du diviseur de flamme (20 ; 20') correspond au nombre desdites parties allongées (33 ; 33') du capuchon (30 ; 30'), de façon à ce que chaque partie allongée (33 ; 33') du capuchon (30 ; 30') puisse être couplée à un appendice correspondant (23 ; 23') du diviseur de flamme (20 ; 20').

3. Brûleur (1 ; 1') selon une ou plusieurs des revendications précédentes, **caractérisé en ce que** le nombre desdits appendices (23 ; 23') et desdites parties allongées (33 ; 33') se situe entre trois et cinq, en particulier le nombre desdits appendices (23 ; 23') et desdites parties allongées (33 ; 33') est quatre.

4. Brûleur (1 ; 1') selon une ou plusieurs des revendications précédentes, **caractérisé en ce que** lesdits appendices (23 ; 23') et lesdites parties allongées (33 ; 33') sont coniques.

5. Brûleur (1 ; 1') selon la revendication 1, **caractérisé en ce que** ledit diviseur de flamme (20; 20') comprend des moyens de centrage (24; 24') pour positionner correctement ledit diviseur de flamme (20 ; 20') par rapport à la coupelle (10 ; 10'), en particulier lesdits moyens de centrage comprenant au moins une ailette (24 ; 24') faisant saillie vers la coupelle (10, 10') et adaptée pour être couplée à un siège correspondant obtenu sur ladite coupelle (10, 10').

6. Brûleur (1 ; 1') selon la revendication 1, **caractérisé en ce que** le diviseur de flamme (20; 20') et/ou le capuchon (30 ; 30') comprend en outre des moyens de couplage (35 ; 35') permettant audit capuchon (30 ; 30') d'être positionné correctement par rapport au diviseur de flamme (20 ; 20') et empêchant le capuchon (30 ; 30') de tourner/de se retourner par rapport audit diviseur de flamme (20 ; 20').

7. Brûleur (1 ; 1') selon la revendication 6, **caractérisé en ce que** lesdits moyens de couplage comprennent au moins une cheville (35) associée au fond avec ledit capuchon (30).

8. Brûleur (1 ; 1') selon la revendication 6, **caractérisé en ce que** lesdits moyens de couplage comprennent des seconds moyens de fixation (36') qui permettent d'assembler le diviseur de flamme (20 ; 20') et le capuchon (30 ; 30') sensiblement en une seule pièce.

9. Brûleur (1 ; 1') selon l'une quelconques des revendications précédentes, **caractérisé en ce que** ladite seconde section (42') de la grille (40') repose sur le plan de travail (P'), en particulier par l'interposition d'un élément porteur (43').

10. Brûleur (1 ; 1') selon l'une quelconques des revendications précédentes, **caractérisé en ce que** ladite grille (40') comprend des éléments de montage (44') adaptés pour assembler chaque seconde section (42') de la grille (40').

11. Appareil de cuisson d'aliments comprenant un brûleur (1 ; 1') selon l'une quelconques des revendications précédentes et un plan de travail (P ; P') **caractérisé en ce que** ledit plan de travail (P : P') de l'appareil de cuisson d'aliments inclut des gaufrages dans les zones correspondant à chaque appendice (23 ; 23') du diviseur de flamme (20 ; 20').
